# FASCICULE DE BREVET EUROPEEN

(11) **EP 3 997 280 B1**
(45) Date de publication et mention de la délivrance du brevet: **17.09.2025**
(21) Numéro de dépôt: 20739948.6
(22) Date de dépôt: 09.07.2020
(51) Int. Cl.: F16J 15/52, E04B 1/68, F16J 15/06

(54) **COMPLEXE DE JOINTS SOUPLES POUR LIAISON D'ÉLÉMENTS DÉSOLIDARISÉS**
KOMPLEX AUS FLEXIBLEN DICHTUNGEN ZUM VERBINDEN VON ENTKOPPELTEN ELEMENTEN
COMPLEX OF FLEXIBLE SEALS FOR CONNECTING UNCOUPLED ELEMENTS

(30) Priorité: 12.07.2019 MC 2682
(43) Date de publication de la demande: 18.05.2022
(73) Titulaire: Marantier, Frédéric Franz, 98000 Monaco (MC)
(72) Inventeur: Marantier, Frédéric Franz, 98000 Monaco (MC)
(74) Mandataire: Hautier IP - MC/EP
(86) Numéro de dépôt international: PCT/EP2020/069435
(87) Numéro de publication internationale: WO 2021/009012

(56) Documents cités:
- US-A- 3 788 021
- US-A- 4 977 719
- US-A- 6 128 874
- US-A1- 2008 263 980
- US-A1- 2010 115 868
- US-A1- 2016 047 242

## Description

### DOMAINE TECHNIQUE

La présente invention concerne le domaine des joints d'étanchéité, et plus particulièrement le domaine des joints souples d'étanchéité.

### ETAT DE LA TECHNIQUE

Les joints d'étanchéité sont généralement utilisés pour empêcher la pénétration d'un fluide tel que de l'eau ou du gaz dans une pièce ou un compartiment. Dans certaines circonstances ces joints doivent présenter des caractéristiques physico-chimiques leur permettant de résister à des variations de pression ou bien encore à des variations de température.

Aujourd'hui, les joints d'étanchéité connus dans l'art antérieur souffrent de nombreuses problématiques dès lors qu'ils sont soumis à des conditions de température et/ou de pression particulière.

La présente invention se propose de résoudre en partie au moins ces inconvénients.

La publication brevet US 2016/047242 A1 divulgue un système de joints d'expansion résistant à l'eau et au feu pour des tunnels. Le document US 4977719 présent un joint d'expansion entre deux éléments avec des propriétés de résistance au feu. Le document US 6128874 présent un joint d'expansion avec une pluralité de couches résistantes au feu. La publication US 2010/115868 A1 divulgue une barrière anti feu pour utilisation dans des espaces de joints d'expansion, selon le préambule de la revendication 1. De manière similaire, le document US 2008/263980 A1 montre une telle barrière utilisable à l'interface entre des portions de bâtiments.

### EXPOSE DE L'INVENTION

La présente invention concerne un joint d'étanchéité déformable, destiné à assurer la jonction entre des éléments désolidarisés, selon la revendication 1.

Il comprend un empilement de couches comprenant au moins :
▪ Une première couche à base d'un premier élastomère ;
▪ Une deuxième couche à base d'un deuxième élastomère.

La première couche comprend une première et une deuxième extrémités, la première extrémité étant destinée à être solidarisée à au moins une première paroi, et la deuxième extrémité étant destinée à être solidarisée à au moins une deuxième paroi, différente de la première paroi, la première extrémité et la deuxième extrémité portant chacune au moins un plot de serrage destiné à coopérer avec au moins un élément de serrage dans une position serrée de sorte à ce que, en position serrée, les éléments de serrage viennent écraser les plots de serrage.

Cela permet lors de la conception de la première couche de former, de préférence dans la couche elle-même, voire sur la couche, un plot destiné à être écrasée lors du serrage et ainsi à assurer une bonne étanchéité.

Il peut aussi éventuellement comprendre une couche intercalaire disposée entre la première couche et la deuxième couche et de préférence comprenant au moins un isolant thermique.

La présente invention permet d'assurer une étanchéité aux fluides tout en résistant à de hautes températures en cas d'incendie, par exemple un incendie d'essence ou de fuel.

En effet, la présente invention permet par exemple de raccorder une paroi verticale avec une paroi horizontale, notamment de sorte à ce que les murs d'une pièce et son sol soient mobiles l'un relativement à l'autre. Cela permet dès lors que si un moteur posé au sol fonctionne, alors les vibrations engendrées par son fonctionnement ne peuvent que très peu, voire pas du tout, se propager aux murs de la pièce puisque la jonction entre les murs de la pièce et le sol est assurée par la présente invention.

Le joint selon la présente invention permet une flexibilité d'une jonction entre deux parois tout en assurant l'étanchéité et la résistance au feu.

Un autre aspect séparable et non limitatif de la présente invention concerne un dispositif de jonction comprenant au moins un joint d'étanchéité, au moins un premier élément de serrage et au moins un deuxième élément de serrage, le premier élément de serrage étant configuré pour coopérer avec une première extrémité du joint d'étanchéité de sorte à solidariser cette première extrémité à une première paroi, le deuxième élément de serrage étant configuré pour coopérer avec une deuxième extrémité du joint d'étanchéité de sorte à solidariser cette deuxième extrémité à une deuxième paroi, différente de la première paroi.

Cela permet d'assurer l'étanchéité ou la continuité d'étanchéité entre deux parois désolidarisées tout en assurant également une résistance élevée à la température en cas d'incendie.

La présente invention concerne aussi un ensemble de parois comprenant au moins une première paroi et au moins une deuxième paroi, au moins l'une parmi la première et la deuxième paroi étant mobile, de préférence désolidarisée, relativement à au moins l'autre parmi la première et la deuxième paroi, la première et la deuxième paroi étant jointes par au moins un dispositif de jonction selon la présente invention.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les figures d'accompagnement suivantes dans lesquelles :
Figure 1 : La figure 1 est un schéma représentant un joint selon la présente invention assurant la jonction entre une première paroi et une deuxième paroi.
Figure 2 : La figure 2 est un schéma d'une vue en coupe d'un joint selon un mode de réalisation de la présente invention avant sa solidarisation à une première paroi et à une deuxième paroi.
Figure 3 : La figure 3 est un schéma d'une vue en coupe d'un joint selon le mode de réalisation de la figure 2 après sa solidarisation à la première paroi et à la deuxième paroi.
Figure 4 : La figure 4 est un schéma d'une vue en coupe d'un joint selon un autre mode de réalisation de la présente invention.
Figure 5 : La figure 5 est un schéma d'une vue en coupe d'un joint selon encore un autre mode de réalisation de la présente invention.
Figure 6 : La figure 4 est un schéma d'une vue en coupe d'un joint selon encore un autre mode de réalisation de la présente invention.
Figure 7 : La figure 7 est un schéma du positionnement en angle d'un joint selon un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions et les proportions ne sont pas représentatifs de la réalité.

### EXPOSE DETAILLE DE MODES DE REALISATION PARTICULIERS

Avant d'entamer une revue détaillée de modes de réalisation de l'invention, sont énoncées ci-après des caractéristiques optionnelles qui peuvent éventuellement être utilisées en association ou alternativement. Ainsi, avantageusement, suivant des variantes préférées, mais non limitatives, l'invention est telle que :
- Chaque plot de serrage comprend au moins une pluralité de crans d'étanchéité formés par des irrégularités de surface, de préférence au niveau dudit plot de serrage.
   Cela permet de renforcer l'étanchéité, de préférence en augmentant l'écrasement du plot par l'élément de serrage par exemple.
- La première couche comprend au moins une pluralité de crans d'étanchéité formés par une ou plusieurs irrégularités de surface au niveau de la surface extérieure de la première couche et/ou dudit plot de serrage.
   Cela permet de renforcer l'étanchéité.
- La deuxième couche comprend au moins une pluralité de crans d'étanchéité formés par une ou plusieurs irrégularités de surface au niveau de la surface extérieure de la deuxième couche.
   Cela permet de renforcer l'étanchéité.
- La première couche comprend une portion intermédiaire localisée entre la première extrémité de la première couche et la deuxième extrémité de la première couche, ladite zone intermédiaire de la première couche étant configurée pour être, de préférence la seule portion de la première couche, en regard, de préférence au contact, de la couche intercalaire.
   Cela permet de concentrer la résistance au feu du joint au niveau exposé à celui-ci, et de ne pas accroître l'épaisseur du joint au niveau de ses extrémités, c'est-à-dire au niveau des zones de solidarisation avec les parois.
- La deuxième couche comprend une première et une deuxième extrémités, la première extrémité étant destinée à être solidarisée à au moins une première paroi, et la deuxième extrémité étant destinée à être solidarisée à au moins une deuxième paroi, différente de la première paroi, la première extrémité et la deuxième extrémité portent chacune au moins une pluralité de crans d'étanchéité formés par des irrégularités de surface.
   Ces irrégularités de surface permettent d'augmenter le caractère étanche du joint en présentant des crans destinés à être écrasés lors du serrage.
- La deuxième couche comprend une portion intermédiaire localisée entre la première extrémité de la deuxième couche et la deuxième extrémité de la deuxième couche, ladite zone intermédiaire de la deuxième couche étant configurée pour être, de préférence la seule portion de la deuxième couche, en regard, de préférence au contact, de la couche intercalaire.
   Cela permet de concentrer la résistance au feu du joint au niveau exposé à celui-ci, et de ne pas accroître l'épaisseur du joint au niveau de ses extrémités, c'est-à-dire au niveau des zones de solidarisation avec les parois.
- Les première et deuxième couches comprennent chacune respectivement une première extrémité et une deuxième extrémité destinées à être solidarisées respectivement à une première paroi et à une deuxième paroi, différente de la première paroi, et la surface intérieure de la première extrémité de la première couche est en regard, de préférence au contact, de la surface intérieure de la première extrémité de la deuxième couche.
   Cela permet de solidariser la première couche avec la seconde couche au moment même de la solidarisation du joint avec les parois.
- La surface extérieure de la première extrémité et la surface extérieure de la deuxième extrémité de la première couche sont destinées à être au regard, de préférence au contact, chacune d'au moins un élément de serrage.
- La surface extérieure de la première extrémité et la surface extérieure de la deuxième extrémité de la deuxième couche sont respectivement destinées à être au regard, de préférence au contact, de respectivement la première et la deuxième paroi.
- La première couche comprend des protubérances s'étendant en direction de la deuxième couche.
   Cela permet d'accroître la résistance au feu. Cela permet également de maintenir en position la couche intercalaire lorsque celle-ci est présente.
- Les protubérances sont creuses, et de préférence forment des tubes, et de préférence s'étendant selon la dimension principale de la première couche. Cela permet de disposer de zone remplie de gaz, notamment de l'air, afin d'accroître la résistance à la température du joint.
- Les protubérances sont portées par la surface intérieure de la première couche en regard de la deuxième couche.
- La couche intercalaire comprend ou est prise parmi au moins un fluide et de préférence un gaz, notamment de l'air et/ou un gaz sous pression. Cette couche est alors par exemple une couche de fluide, non solide, emplissant un espace entre les deux autres couches.
   Cela permet de réduire la conductivité thermique du joint.
- La couche intercalaire est à base de fibres prises parmi au moins : fibres de verre, laine de roche, fibres de carbone, laine ou tissus de céramique.

Cela permet de réduire la conductivité thermique du joint.
- La première couche et la deuxième couche présentent une dureté comprise entre 15 à 100 shore A, de préférence 30 à 90 shore A et avantageusement 35 à 75 shore A.

Cela permet au joint d'être souple et ainsi de permettre des mouvements relatifs des parois l'une par rapport à l'autre jusqu'à de fortes amplitudes.
- Le premier élastomère et le deuxième élastomère sont pris parmi au moins : du caoutchouc, de préférence synthétique, du silicone.
- Le premier élastomère et le deuxième élastomère sont en partie au moins ignifugés.

Cela permet d'accroître la résistance au feu du joint.
- Le premier élastomère et le deuxième élastomère comprennent un traitement d'ignifugation pris parmi au moins :
   ∘ Incorporation dans une partie au moins de l'élastomère d'au moins un additif ;
   ∘ Incorporation dans une partie au moins de l'élastomère d'au moins un retardateur de flamme ;
   ∘ Incorporation dans une partie au moins de l'élastomère d'au moins un élément de charges neutres et/ou céramisantes ;
   ∘ Incorporation dans une partie au moins de l'élastomère d'au moins un agent gonflant et/ou expansible.

Cela permet d'ignifuger et donc d'accroître la résistance au feu du Joint selon la présente invention.
- Les dimensions d'extension principales de la première couche et de la deuxième couche sont égales, et les dimensions d'extension principales de la couche intercalaire sont inférieures aux dimensions d'extensions principales de la première et de la deuxième couche.
- La couche intercalaire peut comprend une couche de fibres ou toile (tissée ou intissée) type verre, carbone, ou kevlar ; seuls ou en combinaison ; et susceptible d'être appliquée en renfort en surface, et/ou en sous-face et/ou à l'intérieur de l'épaisseur de la première couche et/ou de la deuxième couche.
- La couche intercalaire est à base de fibres de préférence de nature résistante au feu tel les laines de céramique ou leurs succédanés, laine de roche, fibre de verre ; utilisées brutes ou ensachées.
- La première couche peut présenter une épaisseur selon la normale à sa surface intérieure vers sa surface extérieure comprise entre de 1mm et 8mm, et de préférence entre 1,5mm et 6mm.
- La deuxième couche peut présenter une épaisseur selon la normale à sa surface intérieure vers sa surface extérieure comprise entre de 1mm et 8mm, et de préférence entre 1,5mm et 6mm.
- La couche intercalaire présenter une épaisseur selon la normale à sa surface comprise entre de 1mm et 20mm, et de préférence entre 2mm et 10mm.
- Les protubérances peuvent présenter une extension selon la direction d'extension principale du joint une forme linéaire, en zigzag, courbe et/ou tubulaire ; elles ont pour fonction complémentaire de maintenir en place la couche intercalaire à base de fibres le cas échéant.
- Le ou les plots de serrage sont présents aux extrémités des première et deuxième couches et servent au maintien en place par un élément de serrage de type cornière par exemple et/ou un plat de serrage.
- Le ou les plots de serrages présentent une hauteur selon la normale à la surface extérieure de la première couche de préférence déterminée par le couple de serrage nécessaire pour résister aux pressions d'usage envisagées et se trouve appliqué aux éléments de serrage, de préférence à un ou des écrous qui serrent des cornières de maintien en étant vissés sur des éléments filetés de type boulons par exemple contre les parois.
- Les crans d'étanchéité peuvent comprendre des striures, ces crans peuvent être localisés notamment en sous-face, mais aussi sur le ou les plots de serrage.
- La couche intercalaire peut être solidarisée à la première couche et/ou à la deuxième couche au niveau des extrémités de la première couche et/ou de la deuxième couche.
- La surface extérieure de la première couche et/ou la surface extérieure de la deuxième couche peuvent être lisses ou structurées d'ondulations pour plus de souplesse si nécessaire.

La présente invention concerne ainsi un joint d'étanchéité déformable 20 destiné à réaliser la jonction entre deux parois 5 dont au moins l'une est mobile relativement à l'autre.

Par exemple, dans un bâtiment, un immeuble, un navire, il peut être utile, voire même stratégique, de disposer d'une pièce dont le sol est en partie au moins, voire totalement, découplé vibratoirement des murs de ladite pièce.

Ainsi par exemple, on peut imaginer des moteurs fonctionnant au fuel, à l'essence ou au diesel par exemple non limitatif, disposés dans une telle pièce au sol. Leurs vibrations peuvent être une source de nuisance importante, il est alors astucieux de pouvoir ne pas transmettre ces vibrations aux murs de la pièce.

De plus, il peut être avantageux que la pièce demeure étanche relativement à l'environnement extérieur de ladite pièce. Enfin, il peut être très important de pouvoir disposer d'une résistance au feu en cas d'incendie de combustibles de type hydrocarbures par exemple. C'est typiquement dans ce type d'environnement que la présente invention peut entrer en jeu.

Le joint 20 selon la présente invention permet la mobilité par exemple du sol relativement aux murs tout en assurant l'étanchéité et cela même en cas d'incendie.

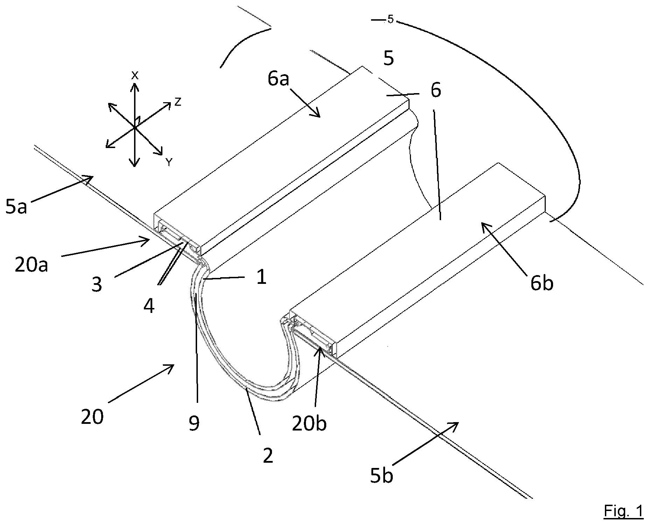

La figure 1 illustre, selon un mode de réalisation, une jonction entre une première paroi 5a et une deuxième paroi 5b réalisée par un joint 20 selon la présente invention.

Sur cette figure par exemple, la première paroi 5a et/ou la deuxième paroi 5b peuvent être mobiles dans les trois directions de l'espace (x, y, z) l'une relativement à l'autre. Le joint 20 présentant une souplesse non nulle est alors déformable et permet ces déplacements relatifs, tout du moins dans une certaine gamme.

En particulier dans le cas de vibrations circulant dans l'une des parois 5a, 5b, le joint 20 selon la présente invention est configuré pour réduire, voire absorber en totalité, lesdites vibrations de sorte que l'autre paroi 5a, 5b ne subissent pas lesdites vibrations.

Ainsi la présente invention concerne un joint 20 d'étanchéité pour les jonctions de parois 5 d'un bâtiment, navire ou sous-marin par exemple non limitatif. Ce joint 5 présente en particulier une capacité à conserver son étanchéité à l'air et au feu lors de mouvements des parois 5 autant dans le sens vertical (x) que horizontal (y) et latéral (z) avec possibilité de cisaillement (déplacement latéral en z inversé d'une paroi 5 à l'autre), d'amplitude conséquente de l'ordre quelques centimètres à quelques décimètres selon les dimensions employées. De préférence, les zones d'assemblage des parois 5 sont planes et/ou peuvent soit être successives comme illustré en figure 1, soit angulées, soit parallèles.

Les zones/plans d'assemblages peuvent présenter en leur extrémité une forme de gouttière destinée à recevoir un ou des plots de serrage.

Sur figure la figure 1, et tel que décrit par la suite, on note le fait que le joint 20 comprend un empilement de couches (1, 2, 9), ainsi qu'une première 20a et une deuxième 20b extrémité.

Cet empilement de couches comprend avantageusement une première couche 1, une deuxième couche 2 et de préférence une couche intercalaire 9 disposée entre la première couche 1 et la deuxième couche 2.

Avantageusement, la première couche 1 est à base d'un premier élastomère et la deuxième couche 2 est à base d'un deuxième élastomère, pouvant être identique ou différent du premier élastomère et/ou pouvant avoir subi un traitement d'ignifugation. Le premier élastomère peut également avoir subi un traitement d'ignifugation, identique ou différent de celui du deuxième élastomère.

C'est en grande partie, mais pas uniquement, l'utilisation d'élastomère qui permet la déformation de la jonction et donc qui apporte la souplesse au joint 20 ainsi formé. On notera que l'on peut entendre par souplesse la capacité d'un matériau à ployer sous l'action de son propre poids par exemple non limitatif.

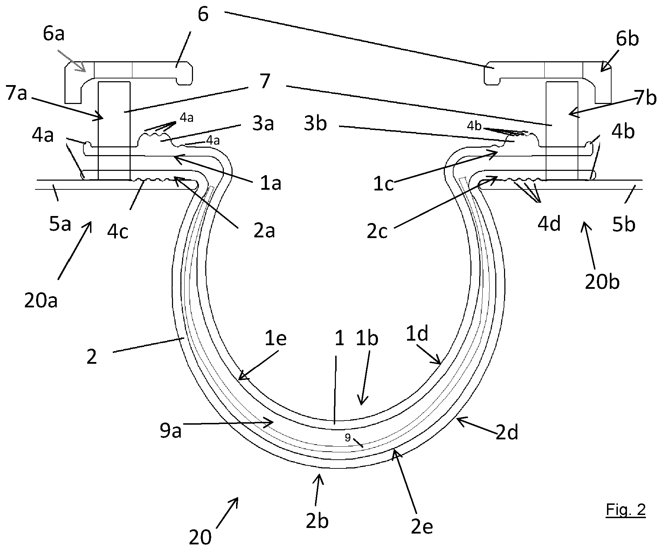

La figure 2 représente une vue en coupe d'une jonction selon un mode de réalisation de la présente invention. Sur cette figure le joint 20 est en place entre les deux parois 5a et 5b, néanmoins sur cette figure, les éléments de serrage 6 ne sont pas encore serrés.

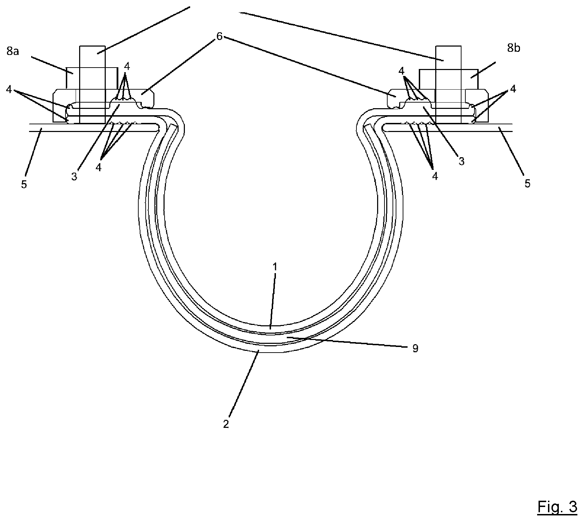

Sur la figure 3, les éléments de serrage 6 sont serrés et viennent ainsi écraser les plots de serrages 3.

Sur ces deux figures, on notera que la première couche 1 comprend une première extrémité 1a et une deuxième extrémité 1c séparées l'une de l'autre par une portion intermédiaire 1b. Cette portion intermédiaire 1b est au regard d'une couche intercalaire 9 ayant pour fonction entre autres d'accroître la résistance dudit joint 20 à la température. La première couche 1 comprend ainsi une surface extérieure 1d et une surface intérieure 1e, la surface extérieure 1d étant en partie au moins en regard des éléments de serrage 6a, 6b, et la surface intérieure 1e étant en partie au moins en regard de la deuxième couche 2 et de la couche intercalaire 9.

La première extrémité 1a de la première couche 1 est montée solidaire de la première paroi 5a. Cette première extrémité 1a comprend un plot de serrage 3a formé de préférence dans la première couche 1 elle-même selon un mode de réalisation préféré. Ce plot de serrage 3a est ainsi disposé, et/ou porté, par la surface extérieure 1d de la première couche 1. La deuxième extrémité 1c de la première couche 1 est, elle, montée solidaire de la deuxième paroi 5b et présente elle aussi un plot de serrage 3b.

Selon un mode de réalisation, la surface des plots de serrage 3a, 3b comprend des crans d'étanchéité 4a, 4b destinés à accroître l'étanchéité de la jonction ainsi formée.

De préférence, la surface extérieure 1d de la première couche 1 peut également comprendre un ou plusieurs crans d'étanchéité 4a, 4b disposés en dehors des plots de serrage 3a, 3b, et par exemple destinés à être en contact avec les éléments de serrage 6a, 6b.

Sur ces deux figures, on notera également que la deuxième couche 2 présente elle aussi une première extrémité 2a destinée à être solidaire de la première paroi 5a et une deuxième extrémité 2c destinée à être solidaire de la deuxième paroi 5b. La deuxième couche 2 comprend également une surface extérieure 2d, en partie au moins en regard de la première paroi 5a et de la deuxième paroi 5b, et une surface intérieure 2e en regard, et de préférence en partie en contact, de la surface intérieure 1e de la première couche 1 et en regard, et de préférence en partie en contact, de la couche intercalaire 9 au niveau d'une portion intermédiaire 2b de la deuxième couche 2 localisée entre la première 2a et la deuxième 2c extrémités.

Selon un mode de réalisation, la deuxième couche 2 comprend, au niveau de sa surface extérieure 2d, de préférence en contact avec la première 5a et la deuxième paroi 5b, au moins une pluralité de crans d'étanchéité 4c, 4d destinés à être écrasés en partie au moins au moment du serrage des éléments de serrage 6a, 6b.

Selon un mode de réalisation, la première couche 1 et la deuxième couche 2 comprennent chacune des crans d'étanchéité 4a 4b, 4c, 4d portés par leur surface extérieure 1d, 2d et disposés de part et d'autre du passage d'un ou de plusieurs boulons 7a, 7b.

On remarquera sur ces figures que la couche intercalaire 9 est à base de fibres 9b et est disposée entre les portions intermédiaires 1b, 2b des première 1 et deuxième 2 couches et de préférence non au niveau des extrémités 1a, 1c, 2a, 2c des première 1 et deuxième 2 couches.

Selon un mode de réalisation, la couche intercalaire 9 peut être solidarisée à la première couche 1 et/ou à la deuxième couche 2.

Selon un mode de réalisation, la couche intercalaire 9 peut n'être constituée que d'un gaz 9a, notamment de l'air par exemple, ou bien comprendre également des fibres 9b, par exemple de la laine de céramique.

Ces fibres 9b peuvent également faire partie d'une toile, d'une nappe ou plus généralement de tout support matriciel.

De manière préférée, la couche intercalaire 9 est simplement disposée, et de préférence maintenue par compression, entre la première couche 1 et la deuxième couche 2.

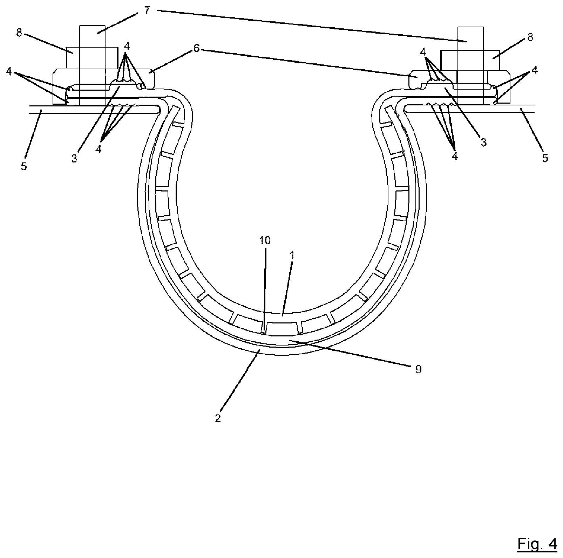

La figure 4 illustre un mode de réalisation de la présente invention dans laquelle la première couche 1 comprend des protubérances 10 portées par sa surface intérieure 1e et s'étendant en direction de la deuxième couche 2.

Selon ce mode de réalisation, ces protubérances 10 viennent appuyer sur la couche intercalaire 9 à base de fibres 9b de manière à les maintenir en position.

Selon ce mode de réalisation, la couche intercalaire 9 peut également comprendre du gaz 9a, en particulier des poches de gaz, notamment de l'air, disposé de préférence entre chaque protubérance 10.

Selon un mode de réalisation non illustré, la deuxième couche 2 peut également comprendre des protubérances 10 disposées et portées par sa surface intérieure 2e et s'étendant vers la première couche 1. Ces protubérances 10 peuvent ou non être complémentaires des protubérances 10 portées par la surface intérieure 1e de la première couche 1.

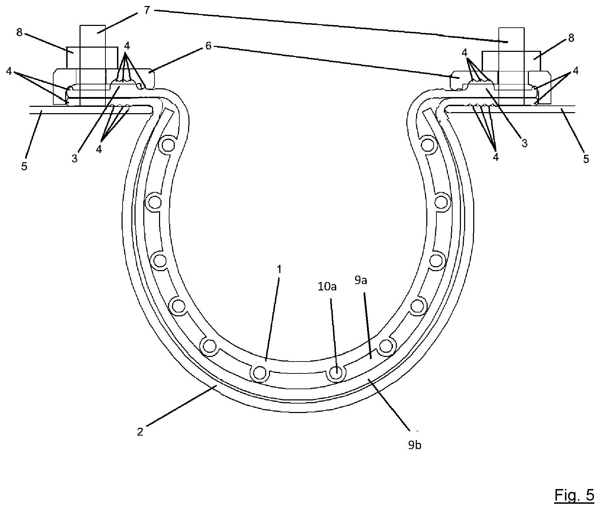

La figure 5 illustre un mode de réalisation dans lequel la première couche 1 comprend des protubérances 10 en forme de tubes 10a creux portés par la surface intérieure 1e de la première couche 1, et s'étendant vers la deuxième couche 2. Ces tubes 10 creux peuvent contenir du gaz, voire tout type de fluide, notamment de l'air.

Selon un mode de réalisation, il peut également s'agir d'un fluide permettant de réduire la conductivité thermique du joint 20 ainsi formé.

Selon un mode de réalisation, ces tubes 10a creux permettent la circulation d'un fluide caloporteur et/ou réfrigérant destiné à réduire la température du joint 20.

Selon le mode de réalisation de la figure 5, la couche intercalaire 9 est à base de fibres 9b et comprend également du gaz 9a, notamment de l'air.

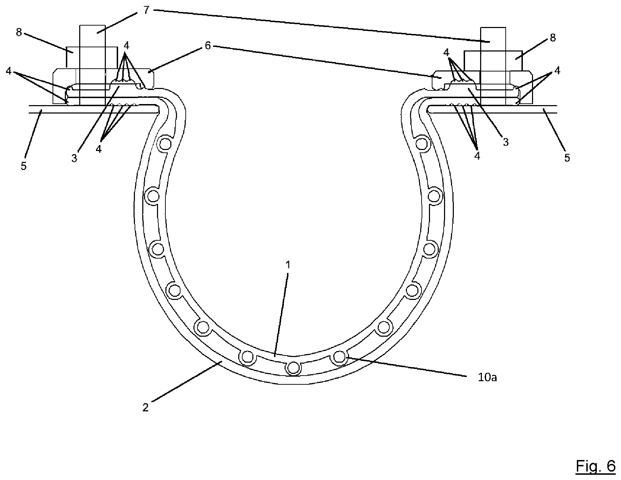

Sur la figure 6, le mode de réalisation illustré est identique à celui de la figure 5 si ce n'est que la couche intercalaire 9 ne comprend que du gaz 9a, notamment de l'air par exemple.

On notera les écrous 8, 8a et 8b sur les figures 3 à 6.

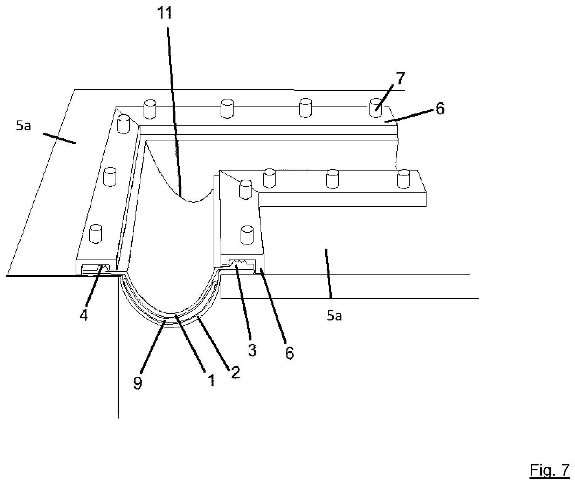

La figure 7 illustre un mode de réalisation de la présente invention dans le cas de la jonction entre deux parois angulées. On parlera ici d'un assemblage d'angle 11. En effet, de par sa conception, la présente invention permet de réaliser des jonctions d'angle afin de pouvoir réaliser des coins. La capacité de déformation et de conception sur-mesure de la présente invention permet de réaliser un assemblage d'angle 11 permettant l'étanchéité, la déformation et la résistance au feu au niveau du coin d'une pièce par exemple, telle que décrite précédemment.

Selon un mode de réalisation, la jonction d'angle comprend une pièce en forme, rapportés par collage ou fusion par exemple, sur des découpes en formes réalisées sur les éléments linéaires, autant en face extérieure qu'en face intérieure, et de préférence sur les deux.

Selon un autre mode de réalisation, la jonction d'angle comprend une pièce en forme d'angle moulée et aboutée aux éléments linéaires.

Selon encore un autre mode de réalisation, la jonction d'angle comprend une pièce issue de la combinaison de ces deux types d'assemblages.

Selon un mode de réalisation, et tel qu'illustré dans les figures précédentes, le joint d'étanchéité 20 déformable présente une forme en U ou en oméga de sorte à former à la fois une barrière au feu ainsi qu'à maintenir une résistance à de fortes pressions, de préférence par l'intermédiaire des plots de serrage 3. La présente invention permet d'assurer la jonction de parois 5 subissant de fortes amplitudes de mouvements relatifs en vis à vis, et cela autant en mouvements d'écartement qu'en cisaillement.

De manière avantageuse, l'ajout d'au moins une couche intercalaire 9 comprenant un isolant thermique permet d'assurer une bonne résistance aux incendies, notamment ceux comprenant des hydrocarbures ou autres liquides enflammés, et cela pendant plus d'une heure, de préférence pendant plus de deux heures.

Références :
1. Première couche
   1a. Première extrémité de la première couche
   1b. Portion intermédiaire de la première couche
   1c. Deuxième extrémité de la première couche
   1d. Surface extérieure de la première couche
   1e. Surface intérieur de la première couche
2. Deuxième couche.
   2a. Première extrémité de la deuxième couche
   2b. Portion intermédiaire de la deuxième couche
   2c. Deuxième extrémité de la deuxième couche
   2d. Surface extérieure de la deuxième couche
   2e. Surface intérieure de la deuxième couche
3. Plot de serrage
   3a. Premier plot de serrage
   3b. Deuxième plot de serrage
4. Crans d'étanchéité
   4a. Première pluralité de crans d'étanchéité de la première couche
   4b. Deuxième pluralité de crans d'étanchéité de la première couche
   4c. Première pluralité de crans d'étanchéité de la deuxième couche
   4d. Deuxième pluralité de crans d'étanchéité de la deuxième couche
5. Paroi
   5a. Première paroi
   5b. Deuxième paroi
6. Elément de serrage
   6a. Premier élément de serrage
   6b. Deuxième élément de serrage
7. Boulon
   7a. Premier boulon
   7b. Deuxième boulon
8. Ecrou
   8a. Premier écrou
   8b. Deuxième écrou
9. Couche intercalaire
   9a. Gaz
   9b. Fibres
10. Protubérances
   10a. Tubes
11. Assemblage d'angle
20. Joint d'étanchéité déformable
   20a. Première extrémité du joint d'étanchéité déformable
   20b. Deuxième extrémité du joint d'étanchéité déformable

## Revendications

1. Joint (20) d'étanchéité déformable, destiné à assurer la jonction entre des éléments désolidarisés (5, 5a, 5b), comprenant un empilement de couches (1, 2, 9, 9a, 9b) comprenant au moins :
▪ Une première couche (1) à base d'un premier élastomère ;
▪ Une deuxième couche (2) à base d'un deuxième élastomère ;
▪ Une couche intercalaire (9, 9a, 9b) disposée entre la première couche (1) et la deuxième couche (2) et comprenant au moins un isolant thermique,
ledit joint d'étanchéité déformable étant configuré en ce que la première couche (1) comprend une première extrémité (1a) et une deuxième extrémité (1c), la première extrémité (1a) étant destinée à être solidarisée à au moins une première paroi (5a), et la deuxième extrémité (1c) étant destinée à être solidarisée à au moins une deuxième paroi (5b), différente de la première paroi (5a), la première extrémité (1a) et la deuxième extrémité (1c) portant chacune au moins un plot de serrage (3, 3a, 3b) destiné à coopérer avec au moins un élément de serrage (6, 6a, 6b) **caractérisé en ce que**, en position serrée, les éléments de serrage (6, 6a, 6b) viennent écraser les plots de serrage (3, 3a, 3b).

2. Joint (20) selon la revendication précédente dans lequel chaque plot de serrage (3, 3a, 3b) comprend au moins une pluralité de crans d'étanchéité (4, 4a, 4b) formés par des irrégularités de surface, de préférence au niveau dudit plot de serrage (3, 3a, 3b).

3. Joint (20) selon l'une quelconque des deux revendications précédentes dans lequel la première couche (1) comprend une portion intermédiaire (1b) localisée entre la première extrémité (1a) de la première couche (1) et la deuxième extrémité (1c) de la première couche (1), ladite zone intermédiaire (1b) de la première couche (1) étant configurée pour être en regard, de préférence au contact, de la couche intercalaire (9).

4. Joint (20) selon l'une quelconque des revendications précédentes dans lequel la deuxième couche (2) comprend une première (2a) et une deuxième (2c) extrémités, la première extrémité (2a) étant destinée à être solidarisée à au moins une première paroi (5a), et la deuxième extrémité (2c) étant destinée à être solidarisée à au moins une deuxième paroi (5b), différente de la première paroi (5a), la première extrémité (2a) et la deuxième extrémité (2c) portent chacune au moins une pluralité de crans d'étanchéité (4, 4c, 4d) formés par des irrégularités de surface.

5. Joint (20) selon la revendication précédente dans lequel la deuxième couche (2) comprend une portion intermédiaire (2b) localisée entre la première extrémité (2a) de la deuxième couche (2) et la deuxième extrémité (2c) de la deuxième couche (2), ladite zone intermédiaire (2b) de la deuxième couche (2) étant configurée pour être en regard, de préférence au contact, de la couche intercalaire (9).

6. Joint (20) selon l'une quelconque des revendications précédentes dans lequel les première (1) et deuxième (2) couches comprennent chacune respectivement une première extrémité (1a, 2a) et une deuxième extrémité (1c, 2c) destinées à être solidarisées respectivement à une première paroi (5a) et à une deuxième paroi (5b), différente de la première paroi (5a), et dans lequel la surface intérieure (1e) de la première extrémité (1a) de la première couche (1) est en regard, de préférence au contact, de la surface intérieure (2e) de la première extrémité (2a) de la deuxième couche (2), et dans lequel la surface extérieure (1d) de la première extrémité (1a) et la surface extérieure (1d) de la deuxième extrémité (1c) de la première couche (1) sont destinées à être au regard, de préférence au contact, chacune d'au moins un élément de serrage (6, 6a, 6b).

7. Joint (20) selon l'une quelconque des revendications précédentes dans lequel la première couche (1) comprend des protubérances (10, 10a) s'étendant en direction de la deuxième couche (2).

8. Joint (20) selon la revendication précédente dans lequel les protubérances (10, 10a) sont creuses, et de préférence forment des tubes (10a), de préférence s'étendant selon la dimension principale de la première couche (1).

9. Joint (20) selon l'une quelconque des deux revendications précédentes dans lequel les protubérances (10, 10a) sont portées par la surface intérieure (1e) de la première couche (1) en regard de la deuxième couche (2).

10. Joint (20) selon l'une quelconque des revendications précédentes dans lequel la première couche (1) et la deuxième couche (2) présentent une dureté comprise entre 15 à 100 shore A, de préférence 30 à 90 shore A et avantageusement 35 à 75 shore A.

11. Joint (20) selon l'une quelconque des revendications précédentes dans lequel le premier élastomère et le deuxième élastomère sont pris parmi au moins : du caoutchouc, de préférence synthétique, du silicone.

12. Joint (20) selon l'une quelconque des revendications précédentes dans lequel le premier élastomère et le deuxième élastomère comprennent un traitement d'ignifugation pris parmi au moins :
▪ Incorporation dans une partie au moins de l'élastomère d'au moins un additif ;
▪ Incorporation dans une partie au moins de l'élastomère d'au moins un retardateur de flamme ;
▪ Incorporation dans une partie au moins de l'élastomère d'au moins un élément de charges neutres et/ou céramisant ;
▪ Incorporation dans une partie au moins de l'élastomère d'au moins un agent gonflant et/ou expansible.

13. Joint (20) selon l'une quelconque des revendications précédentes dans lequel les dimensions d'extension principales de la première couche (1) et de la deuxième couche (2) sont égales, et dans lequel les dimensions d'extension principales de la couche intercalaire (9) sont inférieures aux dimensions d'extensions principales de la première couche (1) et de la deuxième couche (2).

14. Dispositif de jonction comprenant au moins un joint (20) d'étanchéité selon l'une quelconque des revendications précédentes, au moins un premier élément de serrage (6a) et au moins un deuxième élément de serrage (6b), le premier élément de serrage (6a) étant configuré pour coopérer avec une première extrémité (1a, 2a) du joint (20) d'étanchéité de sorte à solidariser cette première extrémité (1a, 2a) à une première paroi (5a), le deuxième élément de serrage (6b) étant configuré pour coopérer avec une deuxième extrémité (1c, 2c) du joint (20) d'étanchéité de sorte à solidariser cette deuxième extrémité (1c, 2c) à une deuxième paroi (5b), différente de la première paroi (5a).

15. Ensemble de parois (5, 5a, 5b) comprenant au moins une première paroi (5a) et au moins une deuxième paroi (5b), au moins l'une parmi la première (5a) et la deuxième (5b) paroi étant mobile relativement à au moins l'autre parmi la première (5a) et la deuxième (5b) paroi, **caractérisé en ce que** la première (5a) paroi et la deuxième (5b) paroi sont jointes par au moins un dispositif de jonction selon la revendication précédente.

## Patentansprüche

1. Verformbare Dichtung (20), die dazu bestimmt ist, die Verbindung zwischen getrennten Elemente (5, 5a, 5b) sicherzustellen, umfassend einen Stapel von Schichten (1, 2, 9, 9a, 9b), der mindestens Folgendes umfasst:
▪ eine erste Schicht (1) auf Basis eines ersten Elastomers;
▪ eine zweite Schicht (2) auf Basis eines zweiten Elastomers;
▪ eine Zwischenschicht (9, 9a, 9b), die zwischen der ersten Schicht (1) und der zweiten Schicht (2) angeordnet ist und mindestens einen Wärmedämmstoff umfasst, wobei die verformbare Dichtung so eingerichtet ist, dass die erste Schicht (1) ein erstes Ende (1a) und ein zweites Ende (1c) umfasst, wobei das erste Ende (1a) dazu bestimmt ist, mit mindestens einer ersten Wand (5a) fest verbunden zu sein, und das zweite Ende (1c) dazu bestimmt ist, mit mindestens einer zweiten Wand (5b) fest verbunden zu sein, die sich von der ersten Wand (5a) unterscheidet, wobei das erste Ende (1a) und das zweite Ende (1c) jeweils mindestens einen Klemmpunkt (3, 3a, 3b) tragen, der dazu bestimmt ist, mit mindestens einem Klemmelement (6, 6a, 6b) zusammenzuwirken, **dadurch gekennzeichnet, dass** die Klemmelemente (6, 6a, 6b) in Klemmposition die Klemmpunkte (3, 3a, 3b) zusammendrücken.

2. Dichtung (20) nach dem vorhergehenden Anspruch, wobei jeder Klemmpunkt (3, 3a, 3b) mindestens eine Vielzahl von Dichtrasten (4, 4a, 4b) umfasst, die durch Oberflächenunregelmäßigkeiten, vorzugsweise im Bereich des Klemmpunkts (3, 3a, 3b), gebildet werden.

3. Dichtung (20) nach einem der beiden vorhergehenden Ansprüche, wobei die erste Schicht (1) einen Zwischenabschnitt (1b) umfasst, der sich zwischen dem ersten Ende (1a) der ersten Schicht (1) und dem zweiten Ende (1c) der ersten Schicht (1) befindet, wobei der Zwischenbereich (1b) der ersten Schicht (1) so eingerichtet ist, dass er sich vorzugsweise in Kontakt mit der Zwischenschicht (9) befindet.

4. Dichtung (20) nach einem der vorhergehenden Ansprüche, wobei die zweite Schicht (2) ein erstes (2a) und ein zweites (2c) Ende umfasst, wobei das erste Ende (2a) dazu bestimmt ist, mit mindestens einer ersten Wand (5a) fest verbunden zu sein, und das zweite Ende (2c) dazu bestimmt ist, mit mindestens einer zweiten Wand (5b), die sich von der ersten Wand (5a) unterscheidet, fest verbunden zu sein, wobei das erste Ende (2a) und das zweite Ende (2c) jeweils mindestens eine Vielzahl von durch Oberflächenunregelmäßigkeiten gebildeten Dichtrasten (4, 4c, 4d) tragen.

5. Dichtung (20) nach dem vorhergehenden Anspruch, wobei die zweite Schicht (2) einen Zwischenabschnitt (2b) umfasst, der sich zwischen dem ersten Ende (2a) der zweiten Schicht (2) und dem zweiten Ende (2c) der zweiten Schicht (2) befindet, wobei der Zwischenbereich (2b) der zweiten Schicht (2) so eingerichtet ist, dass er sich vorzugsweise gegenüber der Zwischenschicht (9) befindet.

6. Dichtung (20) nach einem der vorhergehenden Ansprüche, wobei die erste (1) und zweite (2) Schicht jeweils ein erstes Ende (1a, 2a) und ein zweites Ende (1c, 2c) umfassen, die dazu bestimmt sind, jeweils mit einer ersten Wand (5a) und einer zweiten Wand (5b), die sich von der ersten Wand (5a) unterscheidet, fest verbunden zu sein, und wobei die Innenfläche (1e) des ersten Endes (1a) der ersten Schicht (1) der Innenfläche (2e) des ersten Endes (2a) der zweiten Schicht (2) gegenüberliegt, vorzugsweise in Kontakt mit dieser steht, und wobei die Außenfläche (1d) des ersten Endes (1a) und die Außenfläche (1d) des zweiten Endes (1c) der ersten Schicht (1) dazu bestimmt sind, jeweils einem Klemmelement (6, 6a, 6b) gegenüberzuliegen, vorzugsweise in Kontakt mit diesem zu stehen.

7. Dichtung (20) nach einem der vorhergehenden Ansprüche, wobei die erste Schicht (1) Vorsprünge (10, 10a) umfasst, die sich in Richtung der zweiten Schicht (2) erstrecken.

8. Dichtung (20) nach dem vorhergehenden Anspruch, wobei die Vorsprünge (10, 10a) hohl sind und vorzugsweise Rohre (10a) bilden, die sich vorzugsweise entlang der Hauptabmessung der ersten Schicht (1) erstrecken.

9. Dichtung (20) nach einem der beiden vorhergehenden Ansprüche, wobei die Vorsprünge (10, 10a) von der Innenfläche (1e) der ersten Schicht (1) gegenüber der zweiten Schicht (2) getragen werden.

10. Dichtung (20) nach einem der vorhergehenden Ansprüche, wobei die erste Schicht (1) und die zweite Schicht (2) eine Härte zwischen 15 und 100 Shore A, vorzugsweise 30 bis 90 Shore A und vorteilhafterweise 35 bis 75 Shore A aufweisen.

11. Dichtung (20) nach einem der vorhergehenden Ansprüche, wobei das erste Elastomer und das zweite Elastomer mindestens aus einem von Folgendem ausgewählt sind: Gummi, vorzugsweise synthetischer Gummi, Silikon.

12. Dichtung (20) nach einem der vorhergehenden Ansprüche, wobei das erste Elastomer und das zweite Elastomer eine Flammschutzbehandlung umfasst, die von mindestens Folgendem hergenommen wird:
▪ Einarbeiten mindestens eines Additivs in mindestens einen Teil des Elastomers;
▪ Einarbeiten mindestens eines Flammschutzmittels in mindestens einen Teil des Elastomers;
▪ Einarbeiten mindestens eines neutralen und/oder keramisierenden Füllstoffs in mindestens einen Teil des Elastomers;
▪ Einarbeiten mindestens eines Treibmittels und/oder ausdehnbaren Mittels in mindestens einen Teil des Elastomers.

13. Dichtung (20) nach einem der vorhergehenden Ansprüche, wobei die Haupterstreckungsabmessungen der ersten Schicht (1) und der zweiten Schicht (2) gleich sind, und wobei die Haupterstreckungsabmessungen der Zwischenschicht (9) kleiner sind als die Haupterstreckungsabmessungen der ersten Schicht (1) und der zweiten Schicht (2).

14. Verbindungsvorrichtung, die mindestens eine Dichtung (20) nach einem der vorhergehenden Ansprüche, mindestens ein erstes Klemmelement (6a) und mindestens ein zweites Klemmelement (6b) umfasst, wobei das erste Klemmelement (6a) so eingerichtet ist, dass es mit einem ersten Ende (1a, 2a) der Dichtung (20) zusammenwirkt, um dieses erste Ende (1a, 2a) mit einer ersten Wand (5a) fest zu verbinden, wobei das zweite Klemmelement (6b) so eingerichtet ist, dass es mit einem zweiten Ende (1c, 2c) der Dichtung (20) zusammenwirkt, um dieses zweite Ende (1c, 2c) mit einer zweiten Wand (5b), die sich von der ersten Wand (5a) unterscheidet, fest zu verbinden.

15. Wandanordnung (5, 5a, 5b) umfassend mindestens eine erste Wand (5a) und mindestens eine zweite Wand (5b), wobei mindestens eine von der ersten (5a) und der zweiten (5b) Wand relativ zu mindestens der anderen von der ersten (5a) und der zweiten (5b) Wand beweglich ist, **dadurch gekennzeichnet, dass** die erste (5a) Wand und die zweite (5b) Wand durch mindestens eine Verbindungsvorrichtung nach dem vorhergehenden Anspruch verbunden sind.

## Claims

1. Deformable gasket (20), intended to provide the junction between disconnected elements (5, 5a, 5b), comprising a stack of layers (1, 2, 9, 9a, 9b) comprising at least:
▪ A first layer (1) based on a first elastomer;
▪ A second layer (2) based on a second elastomer;
▪ An intermediate layer (9, 9a, 9b) disposed between the first layer (1) and the second layer (2) and comprising at least one thermal insulator, said deformable seal being configured in that the first layer (1) comprises a first end (1a) and a second end (1c), the first end (1a) being intended to be secured to at least one first wall (5a), and the second end (1c) being intended to be secured to at least one second wall (5b), different from the first wall (5a), the first end (1a) and the second end (1c) each bearing at least one clamping pad (3, 3a, 3b) intended to cooperate with at least one clamping element (6, 6a, 6b) **characterised in that**, in the tightened position, the clamping elements (6, 6a, 6b) crush the clamping pads (3, 3a, 3b).

2. Gasket (20) according to the preceding claim, wherein each clamping pad (3, 3a, 3b) comprises at least a plurality of sealing notches (4, 4a, 4b) formed by surface irregularities, preferably at said clamping pad (3, 3a, 3b).

3. Gasket (20) according to any one of the two preceding claims, wherein the first layer (1) comprises an intermediate portion (1b) located between the first end (1a) of the first layer (1) and the second end (1c) of the first layer (1), said intermediate area (1b) of the first layer (1) being configured to be facing, preferably in contact with, the intermediate layer (9).

4. Gasket (20) according to any one of the preceding claims, wherein the second layer (2) comprises first (2a) and a second (2c) ends, the first end (2a) being intended to be secured to at least one first wall (5a), and the second end (2c) being intended to be secured to at least one second wall (5b), different from the first wall (5a), the first end (2a) and the second end (2c) each have at least a plurality of sealing notches (4, 4c, 4d) formed by surface irregularities.

5. Gasket (20) according to the preceding claim, wherein the second layer (2) comprises an intermediate portion (2b) located between the first end (2a) of the second layer (2) and the second end (2c) of the second layer (2), said intermediate area (2b) of the second layer (2) being configured to be facing, preferably in contact with, the intermediate layer (9).

6. Gasket (20) according to any one of the preceding claims, wherein the first (1) and second (2) layers each comprise respectively a first end (1a, 2a) and a second end (1c, 2c) intended to be secured respectively to a first wall (5a) and to a second wall (5b), different from the first wall (5a), and wherein the inner surface (1e) of the first end (1a) of the first layer (1) is facing, preferably in contact with, the inner surface (2e) of the first end (2a) of the second layer (2), and wherein the outer surface (1d) of the first end (1a) and the outer surface (1d) of the second end (1c) of the first layer (1) are intended to be facing, preferably in contact with, each of at least one clamping element (6, 6a, 6b).

7. Gasket (20) according to any one of the preceding claims, wherein the first layer (1) comprises protrusions (10, 10a) extending toward the second layer (2).

8. Gasket (20) according to the preceding claim, wherein the protrusions (10, 10a) are hollow, and preferably form tubes (10a), preferably extending along the main dimension of the first layer (1).

9. Gasket (20) according to either one of the two preceding claims, wherein the protrusions (10, 10a) are carried by the inner surface (1e) of the first layer (1) facing the second layer (2).

10. Gasket (20) according to any one of the preceding claims, wherein the first layer (1) and the second layer (2) have a hardness of 15 to 100 Shore A, preferably 30 to 90 Shore A and advantageously 35 to 75 Shore A.

11. Gasket (20) according to any one of the preceding claims, wherein the first elastomer and the second elastomer are taken from at least: rubber, preferably synthetic, and silicone.

12. Gasket (20) according to any one of the preceding claims, wherein the first elastomer and the second elastomer comprise a fire retardant treatment taken from at least:
▪ Incorporation of at least one additive into at least part of the elastomer
▪ Incorporation of at least one flame retardant into at least part of the elastomer;
▪ Incorporation of at least one element of neutral and/or ceramicizing fillers into at least part of the elastomer;
▪ Incorporation of at least one swelling and/or expandable agent into at least part of the elastomer.

13. Gasket (20) according to any one of the preceding claims, wherein the main extension dimensions of the first layer (1) and of the second layer (2) are equal, and wherein the main extension dimensions of the intermediate layer (9) are less than the main extension dimensions of the first layer (1) and of the second layer (2).

14. Joining device comprising at least one gasket (20) according to any one of the preceding claims, at least one first clamping element (6a) and at least one second clamping element (6b), the first clamping element (6a) being configured to cooperate with a first end (1a, 2a) of the gasket (20) so as to secure this first end (1a, 2a) to a first wall (5a), the second clamping element (6b) being configured to cooperate with a second end (1c, 2c) of the gasket (20) so as to secure this second end (1c, 2c) to a second wall (5b), different from the first wall (5a).

15. Set of walls (5, 5a, 5b) comprising at least one first wall (5a) and at least one second wall (5b), at least one of the first (5a) and the second (5b) wall being movable relative to at least the other of the first (5a) and the second (5b) wall, **characterised in that** the first (5a) wall and the second (5b) wall are joined by at least one joining device according to the preceding claim.
